(19) Europäisches Patentamt
European Patent Office
Office européen des brevets

(11) Veröffentlichungsnummer **0 062 093**
**B1**

(12) **EUROPÄISCHE PATENTSCHRIFT**

(45) Veröffentlichungstag der Patentschrift: **19.09.84**

(21) Anmeldenummer: **81108185.0**

(22) Anmeldetag: **12.10.81**

(51) Int. Cl.³: **C 08 G 12/46,** C 08 G 12/12, C 08 G 12/32, C 07 D 403/10, D 21 H 3/52, D 21 H 3/80, C 08 L 61/32

(54) **Wässrige Aminoplastdispersionen.**

(30) Priorität: **28.03.81 DE 3112435**

(43) Veröffentlichungstag der Anmeldung: **13.10.82 Patentblatt 82/41**

(45) Bekanntmachung des Hinweises auf die Patenterteilung: **19.09.84 Patentblatt 84/38**

(84) Benannte Vertragsstaaten: **CH DE FR GB LI**

(56) Entgegenhaltungen:
**AU - B - 426 935**
**DE - A - 2 324 134**

(73) Patentinhaber: **BAYER AG, Konzernverwaltung RP Patentabteilung, D-5090 Leverkusen 1 Bayerwerk (DE)**

(72) Erfinder: **Müller, Hanns Peter, Dr., Im Kerberich 6, D-5068 Odenthal-Blecher (DE)**
Erfinder: **Wagner, Kuno, Dr., Am Kiesberg 8, D-5090 Leverkusen 3 (DE)**
Erfinder: **Mummenhoff, Peter, Dr., Silesiusstrasse 76, D-5000 Koeln 80 (DE)**
Erfinder: **Wallpott, Gottfried, Gnadentaler Allee 14, D-4040 Neuss (DE)**
Erfinder: **Scheuss, Karlheinz, Niessenstrasse 64, D-4150 Krefeld (DE)**

**EP 0 062 093 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Gegenstand der Erfindung sind gegebenenfalls gefärbte bzw. weißgetönte, sedimentationsstabile wäßrige Dispersionen von Aminoplasten sowie deren Verwendung in Papierstreichmassen.

Der Ausdruck »Aminoplaste« – in der Literatur gelegentlich auch »Amidharze« oder »Aminharze« genannt (vgl. Römpp's Chemie Lexikon, 8. Auflage, Seite 175) – soll im Rahmen dieser Erfindung im weitesten Sinn, d. h. als Kondensationsprodukte von Aldehyden mit Amino-, Imino- oder Amidgruppen enthaltenden Aminoplastbildner verstanden werden. Bevorzugt sind Harnstoff/Formaldehyd-Kondensate.

Bei der Herstellung dieser auch als UF-Polymere bezeichneten Polykondensate in wäßriger Lösung werden diese üblicherweise abfiltriert, getrocknet, gemahlen und zur Verwendung in wäßrigen Medien redispergiert.

Diese Arbeitsvorgänge sind zeitraubend und kostspielig.

Es wurde nun überraschenderweise gefunden, daß man auf diesen Aufwand verzichten und unmittelbar lagerstabile Dispersionen von Aminoplasten herstellen kann, wenn man die Kondensation der Aldehyde mit den Aminoplastbildnern in wäßrigem Medium in Gegenwart von wasserlöslichen Verbindungen der Formel

$$R-\left[X-(A-O)_m-B-NH-\underset{\underset{O}{\|}}{C}-NH-Y\right]_n \quad (I)$$

durchführt, worin

- R für einen n-wertigen Kohlenwasserstoffrest,
- X für O, NR', $-CONH-$ oder $-COO-$,
- A für einen gleich- oder verschiedenartigen Alkylenrest,
- B für $-CHR'-$ oder $-OC-NH-Z-$,
- Y für H oder einen gegebenenfalls substituierten Alkylrest,
- R' für H, Niedrigalkyl oder Phenyl und
- Z für einen Rest, wie er durch Entfernen der Isocyanatgruppen aus einem organischen Diisocyanat entsteht,
- n für eine ganze Zahl von 1 bis 6 und
- m für eine ganze Zahl von 5 bis 100, stehen.

Geeignete Reste R sind n-wertige $C_1-C_{20}$-Alkan-, $C_3-C_{20}$-Alken-, Cyclohexan- sowie gegebenenfalls vorzugsweise durch $C_1-C_{13}$-Alkylreste substituierte Benzolreste. Bevorzugt sind $C_1-C_6$-Alkylreste.

Der Rest X steht vorzugsweise für ein Sauerstoffatom.

Geeignete Alkylenreste A sind solche der Formeln $-CH_2-$ und vor allem $-CH_2-CHR'-$.

Bevorzugte Reste R' sind H und $C_1-C_4$-Alkyl (besonders Methyl).

Geeignete Alkylreste Y sind $C_1-C_4$-Alkylreste sowie $CH_2-NHCONH_2$. Vorzugsweise steht Y aber für Wasserstoff.

Bevorzugte Reste Z sind solche, wie sie sich von den weiter hinten aufgeführten Diisocyanaten ableiten.

Im Rahmen der Formel I sind wiederum solche Verbindungen bevorzugt, die der Formel (II)

$$R_1-O-\left(CH_2-\overset{\overset{R''}{|}}{C}H-O\right)_p-B_1-NH-CO-NH_2 \quad (II)$$

entsprechen, worin

- $R_1$ für $C_1-C_{12}$-Alkyl, vorzugsweise $C_4-C_8$-Alkyl,
- R'' für H oder $CH_3$ in beliebiger Anordnung,
- $B_1$ für $-CH_2-$ oder $-OC-HN-Z_1-$,
- $Z_1$ für 1,3(1,4)-Phenylen, 2,4(2,6)-Toluylen, Hexahydrotoluylen, $C_2$($C_4$-, oder $C_{12}$)-Alkylen, Cyclohexylen, Perhydrodiphenylmethylen-, Diphenylmethylen oder den Rest der Formel

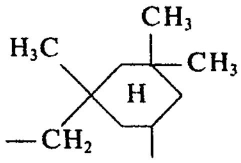

p für eine ganze Zahl von 10—50 stehen.

Man erhält die Verbindungen der Formel I beispielsweise dadurch, daß man ein Polymeres der Formel

$$R-[X-(A-O)_m-H]_n \qquad \text{(III)}$$

mit n Äquivalenten eines Diisocyanats der Formel

$$OCN-B-NCO \qquad \text{(IV)}$$

und anschließend mit n Äquivalenten eines Amins der Formel

$$Y-NH_2 \qquad \text{(V)}$$

umsetzt.

Bevorzugte Amine der Formel V sind $C_1-C_4$-Alkylamine und vor allem Ammoniak. Geeignete Diisocyanate der Formel IV sind solche, wie sie in der US-PS 4 160 754, Spalte 5, beschrieben sind. Besonders bevorzugt sind dabei die technisch leicht zugänglichen Diisocyanate, z. B. Hexamethylendiisocyanat, Isophorondiisocyanat das 2,4- und 2,6-Toluylendiisocyanat sowie beliebige Gemische dieser Isomeren.

Bei der Herstellung der bevorzugten Harnstoff/Formaldehyd-Aminoplaste erfolgte die Synthese der Verbindungen der Formel I (wobei B = $CH_2$ und Y = H) zweckmäßigerweise in situ dadurch, daß man zunächst eine Verbindung der Formel III in wäßrigem Medium bei pH 1—7, bevorzugt 1—4, mit n Äquivalenten Harnstoff und 2 n Äquivalenten Formaldehyd zu einer entsprechenden Verbindung der Formel I umsetzt und dann in dem gleichen Reaktionsmedium — d. h. ohne irgendwelche Zwischenisolierungen — die Herstellung des Harnstoff/Formaldehyd-Aminoplast (Polymethylenharnstoff) in an sich bekannter Weise vornimmt.

In einer besonders bevorzugten Ausführungsform zur Herstellung der erfindungsgemäßen Dispersionen wird die Polykondensation der Aldehyde mit den Aminoplastbildnern in Gegenwart von kondensationsfähige Gruppen aufweisenden Farbstoffen bzw. optischen Aufhellern durchgeführt.

Geeignete Farbstoffe und Aufheller sind übliche substantive Papierfarbstoffe bzw. -aufheller, die mindestens eine kondensationsfähige Amino-, Amid- und/oder Hydroxylgruppe enthalten.

Bevorzugt ist die Verwendung von optischen Aufhellern, insbesondere solche der Bistriazinylaminostilbenreihe.

Besonders geeignete Aufheller entsprechen der Formel

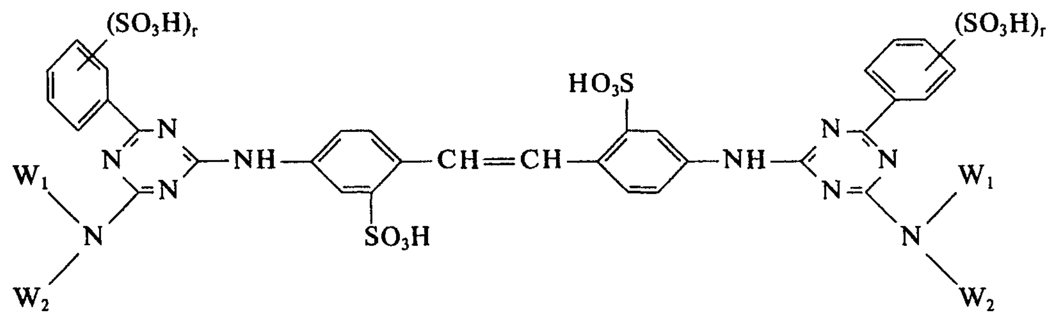

worin

$W_1$ $C_2-C_4$-Hydroxyalkyl,
$W_2$ H, $C_1-C_4$-Alkyl oder $W_1$ und
r eine Zahl von 0 bis 2 bedeuten.

Geeignete Polymere III zur Herstellung der Dispergiermittel I, sind üblicherweise, vorzugsweise monofunktionelle Polyether und Polyacetale.

Als Polyether kommen beispielsweise solche in Betracht, wie sie durch Polymerisation von Epoxiden (z. B. Ethylen-, Propylen-, Butylenoxid sowie Tetrahydrofuran, Styroloxid und Epichlorhydrin) mit selbst (z. B. in Gegenwart von $BF_3$) oder durch Anlagerung dieser Epoxide (gegebenenfalls im Gemisch oder nacheinander) an Startkomponenten mit reaktionsfähigen Wasserstoffatomen, wie Wasser, Alkohole oder Amine erhalten werden.

Als Startkomponenten eignen sich Diole, wie Ethylen-, Diethylen-, Triethylen-, Dipropylen-, Dibutylenglykol und vor allem einwertige niedrige Alkohole wie Ethanol, Propanol, Butanol und Hexanol.

Als Polyacetale kommen z. B. die aus Glykolen, wie Diethylenglykol, Triethylenglykol, 4,4'-Dioxethoxydiphenyldimethylmethan, Hexandiol und Formaldehyd herstellbaren Verbindungen in Frage. Auch

durch Polymerisation cyclischer Acetale lassen sich erfindungsgemäß geeignete Polyacetale herstellen.

Geeignete Aldehyde zur Herstellung der Aminoplaste sind vor allem die technisch leicht zugänglichen und daher preiswerten Typen wie z. B. Acetaldehyd, Butyraldehyd, Benzaldehyd, Salicylaldehyd und insbesondere Formaldehyd, vorzugsweise in wäßriger Lösung.

Geeignete Aminoplastbildner sind ebenfalls die in der Praxis üblichen Typen, wie sie beispielsweise in der US-PS 41 60 754 (Spalten 4—5 sowie 9—13; entspricht DE-OS 27 14 198, Seiten 10—13 sowie 24—29) beschrieben sind.

Bevorzugt sind Harnstoff sowie Melamin bzw. deren niedermolekulare N-Methylolderivate.

Zur Aktivierung der Aminoplast-Bildung und damit zur Aushärtung der UF-Polymeren können alle bekannten Kondensationskatalysatoren verwendet werden, wie z. B. Ameisensäure, Salzsäure, Schwefelsäure, Phosphorsäure, Essigsäure, Thioessigsäure, Maleinsäure und selbstverständlich auch Basen, wie Natriumhydroxid, Kaliumhydroxid, Calciumhydroxid, Bariumhydroxid, Zinkoxid, Magnesiumoxid, Phosphorsäuren, Phosphate, primäres und sekundäres Kaliumhydrogenphosphat, Ammoniumsulfat, zahlreiche organische Säureanhydride usw., Säure abspaltende Verbindungen, wie Ammoniumchlorid, Trimethyl-ammoniumformiat, Chloralhydrat, Aminsalz der Ameisensäure und anderer organischer Carbonsäuren, Maleinsäurehalbester, tert.-Aminsalze usw., Dibenzoylperoxid, Kohlensäure, N-Carbaminsäure, Glykolchlorhydrin, Glycerinchlorhydrin, Epichlorhydrin, die verschiedensten Kupfer-, Zink-, Sn(II)-, Cadmium- und Magnesiumsalze organischer Säuren. Auch die verschiedensten Metalloxide oder deren Hydrate können verwendet werden.

Bevorzugt beim erfindungsgemäßen Verfahren einzusetzende Aktivatoren sind Salzsäure, Schwefelsäure, Phosphorsäure, Ameisensäure, Maleinsäure, Natriumhydroxid, Kaliumhydroxid, Bariumhydroxid, Benzyldimethylamin, Triethylamin.

Die Aktivatoren werden im allgemeinen in Mengen von 0,05—5 Gewichtsprozent bevorzugt 0,1—2 Gewichtsprozent, bezogen auf die Gesamtmenge aller an der Polykondensation beteiligten Reaktionskomponenten, eingesetzt.

Bei der Herstellung der bevorzugten sedimentationsstabilen Aminoplast-Dispersionen verfährt man zweckmäßigerweise so, daß eine Verbindung der Formel I zusammen mit niedermolekularem Harnstoff, einem optischen Aufheller und Formalin in einem Kessel vorgelegt wird. Durch Zugabe von Phosphorsäure wird in der homogenen Mischung ein pH von 4 eingestellt. Bei 60°C bildet sich dann innerhalb einer halben Stunde durch Kondensationsreaktion die UF-Dispersion. Anschließend wird durch Zugabe von wäßriger Na OH ein pH Wert von 8—8,5 eingestellt und durch Zugabe von Wasser auf eine Konzentration von 50% (Feststoff) verdünnt.

In der besonders bevorzugten Ausführungsform des erfindungsgemäßen Verfahrens wird ein monofunktioneller Polyether der Formel III (MG 200—6000, bevorzugt 700—3000) mit Harnstoff und Formaldehyd, im Gegenwert von wenig Wasser bei pH 2 zum entsprechenden O—N-Acetal verknüpft. Das langkettige O—N-Acetal mit der Methylolharnstoffendgruppe ist mit weiterem Harnstoff und Formaldehyd und den reaktiven Gruppen des optischen Aufhellers kondensationsfähig, so daß bei Fortführung der Reaktion bei pH 4, in der vorstehend genannten Weise unmittelbar (»Eintopfverfahren«) stabile Aminoplast-Dispersionen erhalten werden. Durch anschließende Zugabe von NaOH wird ein pH von 8—8,5 eingestellt.

Die so erhaltenen Dispersionen haben im allgemeinen folgende Zusammensetzung:

| | |
|---|---|
| 10 bis 50 Gew.-% | Wasser |
| 25 bis 45 Gew.-% | Polymere der Formeln III bzw. I |
| 1 bis 20 Gew.-% | Aminoplastbildner (z. B. Harnstoff) |
| 0,5 bis 10 Gew.-% | Aldehyd |
| 0,1 bis 10 Gew.-% | Aufheller |
| 0 bis 5 Gew.-% | Diisocyanat |

Diese Dispersionen lassen sich direkt — gegebenenfalls nach entsprechender Verdünnung — in die Streichmassen bei der Papierherstellung einarbeiten und erzeugen dabei einige interessante anwendungstechnische Effekte.

Ganz besonders wertvoll sind die erfindungsgemäßen weißtönerhaltigen Dispersionen. Diese eignen sich hervorragend zum Weißtönen der in der Papierindustrie üblicherweise verwendeten gegebenenfalls pigmentierten Streichmassen. Diese Streichmassen enthalten als Bindemittel Kunststoffdispersionen auf Basis von Copolymerisaten aus Butadien-Styrol, Acrylnitril-Butadien-Styrol, Acrylsäureestern, Ethylen-Vinylchlorid und Ethylen-Vinylacetat; Homopolymerisate, wie Polyvinylchlorid, Polyvinylidenchlorid, Polyethylen, Polyvinylacetat, oder Polyurethan.

Zum Pigmentieren der Streichmassen dienen üblicherweise Aluminiumsilikate wie China-Clay und Kaolin, ferner Bariumsulfat, Satinweiß, Titandioxid oder Calciummassen für Papier. Diese sind beispielsweise in J. P. Casey »Pulp and Paper; Chemistry and Chemical Technology, 2nd Ed. Vol. III, p. 1648—1649 und in Mc Graw-Hill »Pulp and Paper Manufacture«, 2 und Ed. Vol. II p. 497 bzw. EP-A 0 00 3 568 beschrieben.

Die erfindungsgemäßen Präparate können zum Beschichten von Papier, Holz, Folien, Textilstoffen,

nicht gewebten Materialien und geeigneten Baustoffen verwendet werden. Besonders bevorzugt ist die Anwendung auf Papier und Karton sowie Photopapieren.

Die Beschichtung kann auf das Substrat durch jedes herkömmliche Verfahren aufgebracht und getrocknet werden, beispielsweise mit einem Luftmesser, einem Streichmesser, einer Bürste, einer Rolle, einer Rakel oder einem Stab. Der erzielbare Weißgrad kann häufig durch Trocknen bei erhöhten Temperaturen verbessert werden.

Die so erhaltenen Beschichtungen oder Striche besitzen neben einer hohen Lichtechtheit einen ausgezeichneten Weißgrad, wobei der unerwünschte Abfall der Naßfestigkeit des Striches nicht auftritt, der sonst bei Streichfarben, die nur synthetisches Bindemittel enthalten, infolge des Carrier-Zusatzes zu beobachten ist.

Außerdem werden Gleichmäßigkeit, Glätte, Volumen und Bedruckbarkeitseigenschaften verbessert, weil die erfindungsgemäße Polymethylenharnstoff-Weißtönerdispersion als zusätzlicher Füllstoff in der Pigmentmatrix verbleibt und diese für die Bedruckbarkeit günstig beeinflußt.

Die Zugabe der erfindungsgemäßen Präparate zu einer Beschichtungs- oder Streichmasse ist einfach und geschieht in der bei Einsatz der bekannten Weißtöner üblichen Art und Weise, vorzugsweise am Schluß der Streichfarben-Zubereitung, nachdem das Bindemittel bereits eingeführt ist.

Die Menge der einzuarbeitenden Weißtöner-Aminoplast-Dispersion richtet sich nach der Art des Substrates und dem gewünschten Weißgrad und beträgt im allgemeinen 0,1 bis 30, vorzugsweise 0,5 bis 15 g, Weißtönerwirkstoff pro kg Streichmasse.

## Beispiel 1

1400 g (0,7 Mol) eines auf n-Butanol gestarteten Polyethers ($\overline{MG}$ 2000) werden bei 60°C aufgeschmolzen. In diese Schmelze wird eine Lösung aus
42 g (0,7 Mol) Harnstoff und
113,4 g (1,4 Mol) 37%igem Formaldehyd zugegeben. Nach vollständiger Mischung setzt man der Lösung
5,6 ml 85%ige Phosphorsäure zu. Durch die Säurezugabe wird der pH der Mischung auf 2 eingestellt. Im Verlaufe von 15 Minuten bei 60—63°C bildet sich dann in schwach exothermer Reaktion eine weiße Dispersion. In diese Dispersion werden dann eine Lösung von 275 g Brightening Agent 28 (C. I. 40622) und 275 g Harnstoff in 550 g Wasser in einem Guß zugefügt. Dabei stellt sich in der Mischung ein pH von 4 ein. Die Mischung wird 15 Minuten bei 58—60°C gerührt. Anschließend gibt man der Mischung
700 g Wasser und
63 ml 10%ige NaOH-Lösung hinzu, wodurch sich der pH der Mischung auf 8,4 einstellt. Durch erneute Zugabe von 670 g Wasser erhält man eine ca. 50%ige sedimentationsstabile Polymethylenharnstoff-Weißtöner-Dispersion.

## Beispiel 2

Eine sogenannte naturbinderfreie Streichfarbe bestehend aus

350 g Füllstoff auf Kaolin-Basis
350 g China Clay
350 g Kreide
2 g Natriumpolyphosphat
3 g Polyacrylat-Binder
100 g Butadien-Styrol-Copolymerisat-Binder
5 g Ammoniumstearat
3 g Carboxymethylcellulose
840 g Wasser

wird mit Ammoniakwasser auf pH 8,5 eingestellt und mit 30 g der gemäß Beispiel 1 erhaltenen weißtönerhaltigen Polyethylenharnstoff-Dispersion versetzt. 15 g der so hergestellten Streichmasse werden in üblicher Weise mit einer Rakel auf 1 Quadratmeter Rohpapier aufgebracht. Nach dem Trocknen bei 100°C, erhält man ein gestrichenes Papier mit guter Opazität und Glätte sowie hohem Weißgrad und hervorragender Lichtechtheit, so daß es ausgezeichnet für das Bedrucken nach dem Offset-Verfahren geeignet ist.

Beispiel 3

Zu einer Schmelze von 200 g (0,1 mol) Polyethylenglykol vom Molgewicht 1550 wird bei 60°C eine Lösung von 6 g (0,1 mol) Harnstoff in 16,2 g (0,2 mol) Formalin (37%) in einem Guß zugegeben. Durch Zugabe von 0,8 ml Phosphorsäure (85%) wird ein pH-Wert von 1 eingestellt. Es entsteht sofort eine weiße Dispersion. Man rührt dann noch 15 min bei 60°C und weitere 15 min bei 80°C. Dann läßt man auf 60°C abkühlen, verdünnt mit 100 ml Wasser und stellt mit 8 ml Natronlauge (10%) einen pH-Wert von 8,5 ein. Nach weiterem Verdünnen mit 115 ml Wasser erhält man eine ca. 50%ige, sedimentationsstabile weiße Dispersion, die sich ausgezeichnet zur Einarbeitung in Papierstreichmassen auf Kunstharz-Basis eignet.

Beispiel 4

a) 1000 g (0,5 mol) eines auf N,N-Diethylaminoethanol gestarteten Polyethylen(propylen)glykols vom Molgewicht 2200 und 1 ml Benzoylchlorid werden vermischt und 30 Minuten bei 120°C und 20 mbar entwässert. Zu der entstandenen Lösung werden bei 70°C 84 g (0,5 mol) Hexamethylendiisocyanat in einem Guß zugegeben. Das Reaktionsgemisch wird dann unter Stickstoff 20 min bei 120°C gerührt. Der NCO-Gehalt beträgt dann 1,93% (ber. 1,94%).

Aus einem beheizten Tropftrichter wird das Reaktionsgemisch in eine Lösung von 34,25 g wäßrigen Ammoniak (25%) in 1100 ml Wasser getropft, wobei die Innentemperatur von 20 auf 46°C ansteigt. Man erhält eine ca. 50%ige Lösung des Dispergiermittels der Formel

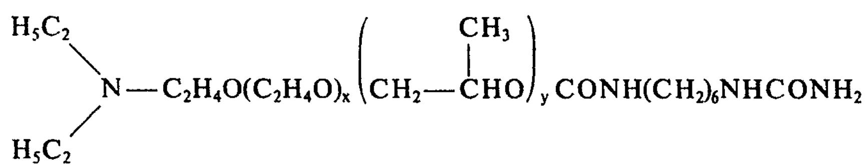

b) 218,5 g (0,05 mol) dieser Lösung werden mit einer wäßrigen Lösung von 16,59 g (0,015 mol) des Aufhellers der Formel

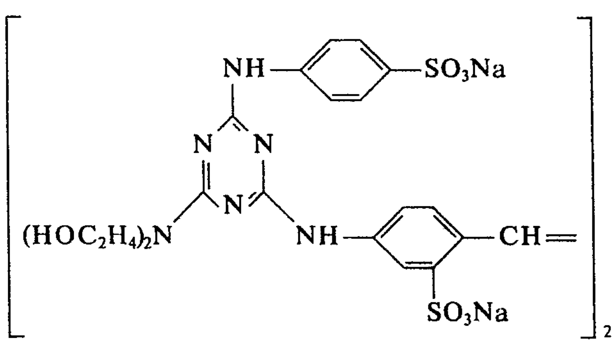

und 17,13 (0,285 mol) Harnstoff in 35 ml Wasser vermischt. Nach Zugabe von 31,2 g Formaldehydlösung (37%; 0,35 mol) wird mit 0,6 ml Phosphorsäure (83%) ein pH-Wert von 4 eingestellt. Nun wird 9 Stunden bei Raumtemperatur gerührt, bevor 2 ml NaOH (40%) zugesetzt werden, um einen pH von 11 einzustellen.

Man erhält eine einsatzfertige lagerstabile weißtönerhaltige Polymethylenharnstoff-Dispersion.

c) Der in a) eingesetzte Polyether wurde wie folgt hergestellt:

117 g (1 Mol) Diethylethanolamin und 500 g Toluol werden bei Raumtemperatur vorgelegt. Durch zweimaliges Evakuieren und Wiederauffüllen des Reaktionsgefäßes mit Stickstoff wird der Luftsauerstoff entfernt. Nach Erwärmen auf 80°C wird 5,6 g 50%ige wäßrige Kalilauge zugegeben. Anschließend wird weiter erwärmt. Zwischen 100 und 115°C werden das Lösungs- und Reaktionswasser azeotrop abdestilliert. Nach beendeter Destillation werden zu dem gut rührbaren Gemisch bei 100—105°C und bei einem Druck von 0,4 bis 0,6 bar ein Gemisch aus 5,39 Mol (312 g) Propylenoxid und 30,77 Mol (1354 g) Ethylenoxid allmählich zudosiert. Je nach Erforderung wird durch Kühlen oder Heizen des Reaktionsgemisches die Reaktionstemperatur in diesem Bereich gehalten. Nach beendeter Zugabe werden weitere 9,47 Mol (416 g) Ethylenoxid dem Reaktionsgemisch allmählich zudosiert. Nach beendeter Alkylenoxid-Zugabe (ca. 6 h) wird noch weitere 3 h bei 100—105°C gerührt.

Das alkalische Polymerisat wird nach Zugabe von 300 g $H_2O$ mit 0,05 Mol $H_2SO_4$ (9,6 g 50%ig) neutralisiert. Anschließend wird bei 70—90°C nach Zugabe von Filtrierhilfsmitteln (Zellstoffpulver) und einen Antioxidans (2,6-Di-tert.-butyl-p-kresol) das Wasser im Vakuum abdestilliert.

Bei einem Wassergehalt von 0,9% werden die abgeschiedenen Salze und der Filterhilfsanteil (bei

60°C) abfiltriert. Zur vollständigen Entfernung des Wassers wird das Filtrat anschließend bei 100–105°C im Vakuum ausdestilliert.

Das erhaltene schwachgelbe Produkt besitzt folgende physikalische Daten:

| | |
|---|---|
| Hydroxylzahl: | 123 |
| pH-Wert: | 8,5 |
| Wassergehalt: | 0,05 |
| $\overline{MG}$: | 2200 |

Beispiel 5

50 g der nach Beispiel 4 b erhaltene Weißtöner/Aminoplast-Dispersion werden in eine Streichmasse bestehend aus

| | |
|---|---|
| 850 g | China Clay |
| 99,4 g | Kreide |
| 1,8 g | Natriumpolyphosphat |
| 1 g | Natriumacrylat |
| 1,8 g | NaOH (45%) |
| 730 g | Wasser |
| 302 g | einer 50%igen Acrylestercopolymerisat-Dispersion (Typ Acronal® S 320 D) |
| 19 g | Carboxymethylcelluloselösung (50%) |
| 2000 g | |

eingearbeitet. Ein damit bestrichenes Rohpapier weist einen hohen Weißgrad und eine sehr gute Lichtechtheit auf.

Beispiel 6

100 g (0,05 mol) des in Beispiel 1 verwendeten Polyethers werden mit 3 g Harnstoff und 8,1 g Formalin (37%) in Gegenwart von 0,4 ml Phosphorsäure (85%) analog Beispiel 1 umgesetzt.

Zu der erhaltenen wäßrigen Dispersion werden 90 g einer 15%igen wäßrigen Lösung des Farbstoffs der Formel

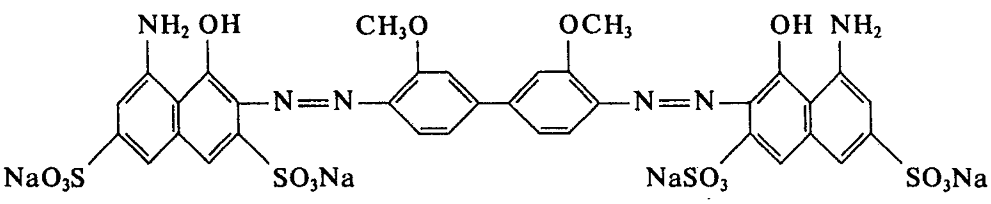

zugegeben. Man rührt noch 15 Minuten bei 50–55°C nach, kühlt auf 20°C ab und stellt mit 4 ml in NaOH auf pH 8,4. Nach Zugabe von 34 ml Wasser erhält man eine ca. 50%ige blaugefärbte Aminoplast-Dispersion, die sich hervorragend zur Einarbeitung in farbige Papierstreichmassen eignet.

**Patentansprüche**

1. Wäßrige Dispersionen von Aminoplasten erhalten durch Kondensation von Aldehyden mit Aminoplastbildnern in wäßrigem Medium in Gegenwart von wasserlöslichen Verbindungen der Formel

$$R-\left[X-(A-O)_m-B-NH-\underset{\underset{O}{\|}}{C}-NH-Y\right]_n \qquad (I)$$

worin

R für einen n-wertigen Kohlenwasserstoffrest,
X für O, NR', –CONH– oder –COO–,
A für einen gleich- oder verschiedenartigen Alkylenrest,
B für –CHR'– oder –OC–NH–Z–,
Y für H oder einen gegebenenfalls substituierten Alkylrest,

R' für H, Niedrigalkyl oder Phenyl und
Z für einen Rest, wie er durch Entfernen der Isocyanatgruppen aus einem organischen Diisocyanat entsteht,
n für eine ganze Zahl von 1 bis 6 und
m für eine ganze Zahl von 5 bis 100, stehen.

2. Wäßrige Dispersionen gemäß Anspruch 1, dadurch gekennzeichnet, daß die Aminoplaste Polymethylenharnstoffe sind.

3. Wäßrige Dispersionen gemäß Anspruch 1, dadurch gekennzeichnet, daß die Aminoplaste Melamin/Formaldehyd-Polykondensate sind.

4. Wäßrige Dispersionen gemäß Anspruch 1, dadurch gekennzeichnet, daß man die Aminoplastbildung in Gegenwart von Verbindungen der Formel

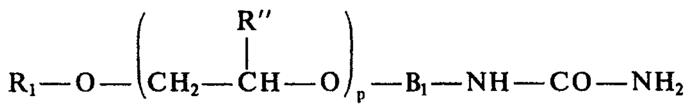

(II)

durchführt, worin

$R_1$ für $C_1-C_{12}$-Alkyl, vorzugsweise $C_4-C_8$-Alkyl,
R'' für H oder $CH_3$ in beliebiger Anordnung,
$B_1$ für $-CH_2-$ oder $-OC-NH-Z_1-$,
$Z_1$ für 1,3(1,4)-Phenylen, 2,4(2,6)-Toluylen, $C_2$($C_4$, $C_6$ oder $C_{12}$)-Alkylen, $C_6$-Cycloalkylen oder Diphenylmethylen und
p für eine ganze Zahl von 10—50 stehen.

5. Wäßrige Dispersionen gemäß Anspruch 1, dadurch gekennzeichnet, daß man die Aminoplastbildung und die Herstellung der Verbindungen der Formel I im gleichen Reaktionsgefäß durchführt.

6. Wäßrige Dispersionen gemäß Anspruch 1, dadurch gekennzeichnet, daß man die Aminoplastbildung in Gegenwart von kondensationsfähigen Farbstoffen oder optischen Aufhellern durchführt.

7. Wäßrige Dispersionen gemäß Anspruch 1, daß man die Aminoplastbildung in Gegenwart von Aufhellern der Formel

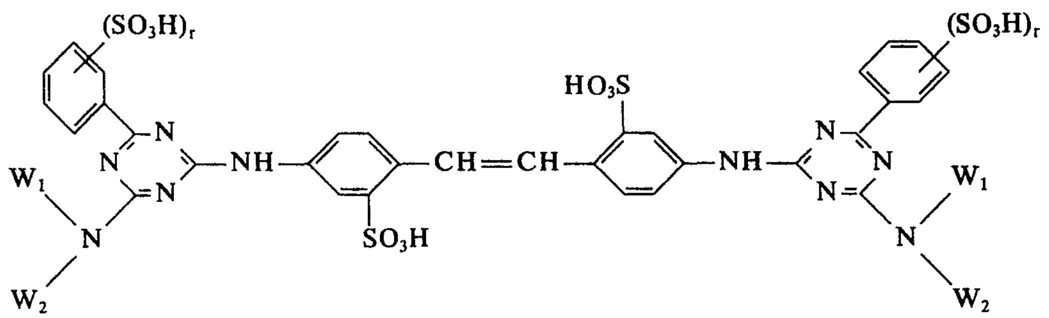

durchführt, worin

$W_1$ $C_2-H_4$-Hydroxyalkyl,
$W_2$ H, $C_1-C_4$-Alkyl oder $W_1$ und
r eine Zahl von 0 bis 2 bedeuten.

8. Verwendung der wäßrigen Dispersionen gemäß Anspruch 1 zur Einarbeitung in Streichmassen für Papier.

## Claims

1. Aqueous dispersions of aminoplastic resins obtained by condensation of aldehydes with aminoplastic resin formers in aqueous medium, in the presence of watersoluble compounds of the formula

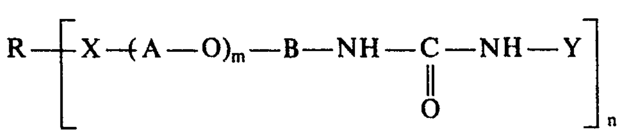

(I)

wherein

R represents an n-valent hydrocarbon radical,
X represents O, NR', —CONH— or —COO—,
A represents an identical or different alkylene radical,
B represents —CHR'— or —OC—NH—Z—,
Y represents H or an optionally substituted alkyl radical,
R' represents H, lower alkyl or phenyl and
Z represents a radical such as that formed by removal of the isocyanate groups from an organic diisocyanate,
n represents an integer from 1 to 6 and
m represents an integer from 5 to 100.

2. Aqueous dispersions according to Claim 1, characterised in that the aminoplastic resins are polymethyleneureas.

3. Aqueous dispersions according to Claim 1, characterised in that the aminoplastic resins are melamine/formaldehyde polycondensates.

4. Aqueous dispersions according to Claim 1, characterised in that the aminoplastic resin formation is carried out in the presence of compounds of the formula

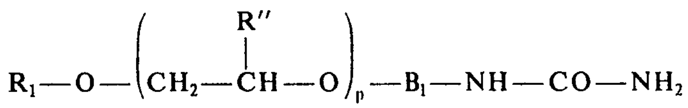 (II)

wherein

$R_1$ represents $C_1$—$C_{12}$-alkyl, preferably $C_4$—$C_8$-alkyl,
R'' represents H or $CH_3$ in any desired arrangement,
$B_1$ represents —$CH_2$— or —OC—NH—$Z_1$—,
$Z_1$ represents 1,3(1,4)-phenylene, 2,4(2,6)-toluylene, $C_2$($C_4$, $C_6$ or $C_{12}$)-alkylene, $C_6$-cycloalkylene or diphenylmethylene and
p represents an integer of 10—50.

5. Aqueous dispersions according to Claim 1, characterised in that the aminoplastic resin formation and the preparation of the compounds of the formula I are carried out in the same reaction vessel.

6. Aqueous dispersions according to Claim 1, characterised in that the aminoplastic resin formation is carried out in the presence of dyestuffs or optical brighteners capable of condensation.

7. Aqueous dispersions according to Claim 1, characterised in that the aminoplastic resin formation is carried out in the presence of brighteners of the formula

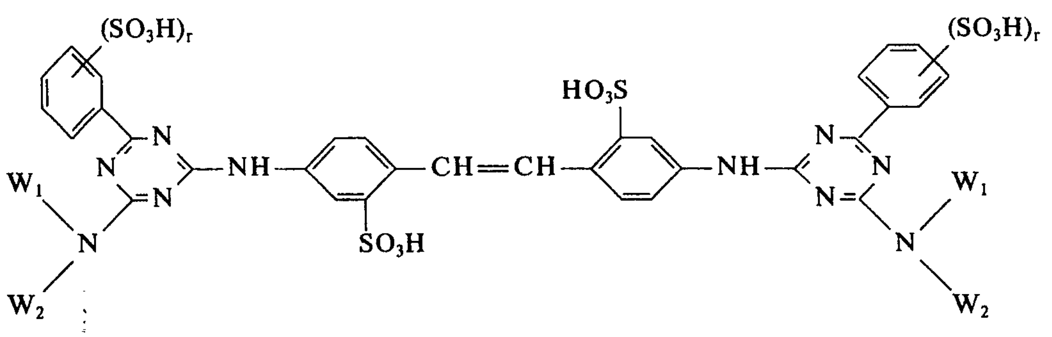

wherein

$W_1$ denotes $C_2$—$H_4$-hydroxyalkyl,
$W_2$ denotes H, $C_1$—$C_4$-alkyl or $W_1$, and
r denotes a number from 0 to 2.

8. Use of the aqueous dispersions according to Claim 1 for incorporation in coating compositions for paper.

**Revendications**

1. Dispersions aqueuses d'aminoplastes obtenues par condensation d'aldéhydes avec des générateurs d'aminoplastes en milieu aqueux en présence de composés hydrosolubles de formule

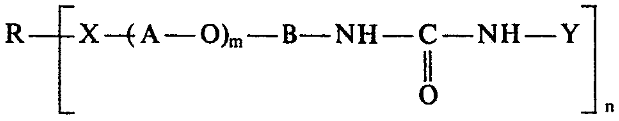

(I)

dans laquelle

R désigne un reste hydrocarboné de valence n,
X représente O, NR', —CONH— ou —COO—,
A représente un même reste alkylène ou des restes alkylène différents,
B représente —CHR'— ou —OC—NH—Z—,
Y est l'hydrogène ou un reste alkyle éventuellement substitué,
R' représente H, un groupe alkyle inférieur ou phényle et
Z est un reste formé par enlèvement des groupes isocyanato d'un diisocyanate organique,
n est un nombre entier de 1 à 6 et
m est un nombre entier de 5 à 100.

2. Dispersions aqueuses suivant la revendication 1, caractérisées en ce que les aminoplastes sont des polyméthylène-urées.

3. Dispersions aqueuses suivant la revendication 1, caractérisées en ce que les aminoplastes sont des produits de polycondensation mélamine/formaldéhyde.

4. Dispersions aqueuses suivant la revendication 1, caractérisées en ce que la formation des aminoplastes est conduite en présence de composés de formule

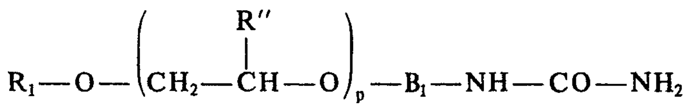

(II)

dans laquelle

$R_1$ est un groupe alkyle en $C_1$ à $C_{12}$, de préférence un groupe alkyle en $C_4$ à $C_8$,
R'' représente H ou un groupe $CH_3$ à disposition quelconque,
$B_1$ est un groupe $-CH_2-$ ou $-OC-NH-Z_1-$,
$Z_1$ est un groupe 1,3(1,4)-phénylène, 2,4(2,6)toluylène, alkylène en $C_2$($C_4$, $C_6$ ou $C_{12}$), cycloalkylène en $C_6$ ou diphénylméthylène et
p est un nombre de 10 à 50.

5. Dispersions aqueuses suivant la revendication 1, caractérisées en ce qu'on conduit la formation de l'aminoplaste et la préparation des composés de formule (I) dans le même récipient de réaction.

6. Dispersions aqueuses suivant la revendication 1, caractérisées en ce que la formation d'aminoplastes est conduite en présence de colorants aptes à la condensation ou d'azurants optiques.

7. Dispersions aqueuses suivant la revendication 1, caractérisées en ce que la formation des aminoplastes est conduite en présence d'azurants de formule

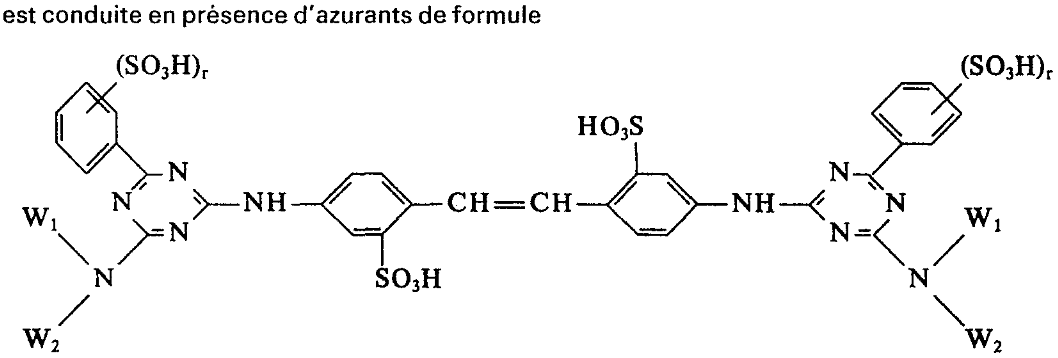

dans laquelle

$W_1$ est un groupe hydroxyalkyle en $C_2$ à $C_4$,
$W_2$ représente H, un groupe alkyle en $C_1$ à $C_4$ ou $W_1$ et
r est un nombre de 0 à 2.

8. Utilisation des dispersions aqueuses suivant la revendication 1 par incorporation à des bains de couche pour papier.